# EUROPEAN PATENT APPLICATION

(11) **EP 3 467 156 A1**
(43) Date of publication of application: **10.04.2019**
(21) Application number: 17802853.6
(22) Date of filing: 24.05.2017
(51) Int. Cl.: C25D 15/02, B32B 15/01, B32B 15/18, C23C 28/00, C25D 5/26, C25D 5/48, C25D 11/38

(54) **CONTAINER STEEL SHEET**

(30) Priority: 24.05.2016 JP 2016103541
(71) Applicant: Nippon Steel & Sumitomo Metal Corporation, Tokyo 100-8071 (JP)
(72) Inventor: HIRANO, Shigeru, Tokyo 100-8071 (JP); TANI, Yoshiaki, Tokyo 100-8071 (JP); YAMANAKA, Shintaro, Tokyo 100-8071 (JP); YOKOYA, Hirokazu, Tokyo 100-8071 (JP)
(74) Representative: Vossius & Partner Patentanwälte Rechtsanwälte mbB
(86) International application number: PCT/JP2017/019437
(87) International publication number: WO 2017/204267

(57) **Abstract**

A steel sheet for a container includes: a steel sheet; an Ni plated layer, which is arranged on at least one side of the steel sheet and is adhered in an amount of from 0.3 to 3 g/m² per side in terms of metal Ni amount; and a chromate coated film or a Zr coated film which is arranged on the Ni plated layer, in which the Ni plated layer contains from 0.1 to 20% by mass of ZnO particles per side in terms of metal Zn amount.

## Description

### BACKGROUND

### Technical Field

The present disclosure relates to a steel sheet for a container.

### Background Art

There are cases in which a plated steel sheet is used as a material for a container (see, for example, Patent Documents 1 to 8). Examples of such a container using a plated steel sheet include two-piece cans and three-piece cans.

A "two-piece can" refers to a can configured by a can bottom and a can body section that are integrated with each other and, for example, DrD (Draw and Redraw) cans and DI (Drawing and Ironing) cans are known. Two-piece cans are formed by a drawing process, an ironing process, a bending-unbending process, or a combination of these processes. Examples of a plated steel sheet used in these cans include tin plates (Sn-plated steel sheets) and TFS (tin-free steel: electrolytically chromated steel sheets), and these plated steel sheets are selectively used in accordance with the application and the processing method.

A "three-piece can" refers to a can configured by a can body section and a bottom section that are separately formed. Three-piece cans are typically welded cans whose body sections are produced by electric resistance welding. In such welded cans, TFS is used as a bottom plate, and a lightly Sn-plated or Ni-plated steel sheet is used as a body material.
Patent Document 1: Japanese Patent Application Laid-Open (JP-A) No. 2000-263696
Patent Document 2: JP-A No. 2000-334886
Patent Document 3: Japanese Patent No. 3060073
Patent Document 4: Japanese Patent No. 2998043
Patent Document 5: JP-A No. 2007-231394
Patent Document 6: JP-A No. 2000-26992
Patent Document 7: JP-A No. 2005-149735
Patent Document 8: Japanese Patent No. 4886811

### SUMMARY OF INVENTION

### Technical Problem

In the above-described two-piece cans and three-piece cans, printing is performed on the can outer surface so as to bring the attention of consumers to a product's commercial value. In addition, the can inner surface is coated with a resin so as to ensure corrosion resistance.

In conventional two-piece cans, after the formation of each can body, the can inner side is coated by spraying or the like, and curved surface printing is performed on the can outer side. However, in recent years, laminated two-piece cans produced from a laminated steel sheet having a PET film laminated thereon in advance have become widespread (see, for example, Patent Documents 1 and 2).

Further, in welded cans, conventionally, a can body is produced by welding a steel sheet whose can inner surface is coated and the can outer surface is printed on. However, in recent years, a PET film on which printing is performed in advance instead of coating is prepared, and three-piece cans using a laminated steel sheet on which such a PET film is laminated have also become widespread (see, for example, Patent Documents 3 and 4).

On the two-piece cans, a drawing process, an ironing process, a bending-unbending process and the like are performed. Further, on the three-piece cans, neck processing, flange processing and, depending on the case, expansion processing for design are performed. Accordingly, laminated steel sheets are now required to have excellent film adhesion that can conform to such processes. Sn-plated steel sheets, because of the excellent sacrificial anticorrosive action of Sn, exhibit excellent corrosion resistance even against acidic content. However, Sn-plated steel sheets do not exhibit stable film adhesion due to the presence of brittle Sn oxide on their outermost layers. Moreover, in the production of the above-described cans, Sn-plated steel sheets may (1) cause detachment of a film therefrom and (2) serve as an origin of corrosion due to insufficient adhesion with the film.

Ni-plated sheet sheets that have excellent workability and film adhesion and that are weldable have been used as laminated steel sheets (see, for example, Patent Document 5). Although such Ni-plated steel sheets do not have the glossy outer appearance of Sn-plated steel sheets, it has been reported that glossy plating can be performed depending on the Ni plating method (see, for example, Patent Documents 6 and 7).

When the inside of a produced can is filled with a food product such as fish, meat, vegetables or beans, proteins contained in the food product are partially decomposed by a heat sterilization process (e.g., retort treatment) to generate a sulfur (S) component. It is known that the thus generated S component binds with Ni to form black NiS (sulfide staining) and deteriorates the inner surface quality of the can in some cases. Therefore, a further improvement in sulfide stain resistance has been demanded for Ni-plated steel sheets.

The disclosure was made in view of the above-described problems, and an object of the disclosure is to provide a steel sheet for a container which has superior sulfide stain resistance, corrosion resistance, adhesion and weldability.

### Solution to Problem

The means for solving the above-described problems include the following modes.
(1) A steel sheet for a container including: a steel sheet; an Ni plated layer, which is arranged on at least one side of the steel sheet and is adhered in an amount of from 0.3 to 3 g/m² per side in terms of metal Ni amount; and a chromate coated film or a Zr coated film, which is arranged on the Ni plated layer, wherein the Ni plated layer contains from 0.1 to 20% by mass of ZnO particles per side in terms of metal Zn amount.
(2) The steel sheet for a container according to (1), wherein the Ni plated layer contains from 0.5 to 15% by mass of the ZnO particles per side in terms of metal Zn amount.
(3) The steel sheet for a container according to (1) or (2), wherein the chromate coated film contains from 1 to 40 mg/m² of Cr per side in terms of metal Cr amount.
(4) The steel sheet for a container according to (1) or (2), wherein the Zr coated film contains from 1 to 40 mg/m² of Zr per side in terms of metal Zr amount.

### Effects of Invention

According to the disclosure, a steel sheet for a container which has superior sulfide stain resistance, corrosion resistance, adhesion and weldability can be provided.

### DESCRIPTION OF EMBODIMENTS

### Mode for Carrying Out the Invention

In the present specification, those numerical ranges that are expressed with "to" each denote a range that includes the numerical values stated before and after "to" as the minimum value and the maximum value, respectively.

In the present specification, the term "step" encompasses not only discrete steps but also steps which cannot be clearly distinguished from other steps, as long as the intended purpose of the step is achieved.

In the present specification, the term "steel sheet" means a steel sheet to which an Ni plated layer and a chromate coated film or a Zr coated film have not been applied yet. In the following descriptions, such a steel sheet to which an Ni plated layer and a chromate coated film or a Zr coated film have not been applied yet may be referred to as "plating base sheet".

In the present specification, the term " steel sheet for a container " means a steel sheet to which an Ni plated layer and a chromate coated film or a Zr coated film have been applied.

In the present specification, the use of a simple term "adhesion" means adhesion encompassing lacquer adhesion, secondary lacquer adhesion and film adhesion.

One preferred embodiment of the steel sheet for a container of the disclosure is described below in detail.

The steel sheet for a container of the disclosure exhibits excellent sulfide stain resistance, excellent corrosion resistance, excellent adhesion and excellent weldability. The steel sheet for a container of the disclosure can be used in, for example, two-piece cans and three-piece cans. The steel sheet for a container of the disclosure is described below in detail.

When an Ni-plated steel sheet subjected to Ni plating is applied to a beverage can, the Ni-plated steel sheet rarely deteriorates the inner surface quality of the can, allowing the can to have sufficient sulfide stain resistance. However, for the application of such an Ni-plated steel sheet to a food can to be filled with the above-described food product as its content, a further improvement in sulfide stain resistance is demanded.

The present inventors intensively studied to solve the above-described problems. As a result, the present inventors discovered that sulfide stain can be inhibited by dispersing and thereby incorporating ZnO particles into an Ni plated layer.

ZnO particles are particles capable of capturing S, which causes sulfide stain, in the form of ZnS. However, in the formation of a very thin Ni plated layer on a steel sheet used as a conventional steel sheet for a container, there is no technology for incorporating fine ZnO particles as an insulating substance into the Ni plated layer.

It may also be considered incorporating ZnO particles into a chromate coated film or a Zr coated film on an Ni plated layer. However, since the thickness of such a coated film is smaller than the average particle size of the ZnO particles, the ZnO particles are exposed from the coated film in many cases. Therefore, it is difficult in reality to incorporate the ZnO particles into such a coated film.

Based on this finding, a further investigation was conducted. As a result, the present inventors discovered that, by controlling the content of ZnO particles in an Ni plated layer, the sulfide stain resistance is improved without deteriorating the corrosion resistance, the adhesion and the weldability that are provided by Ni plating.

### (Plating Base Sheet)

In the steel sheet for a container of the disclosure, the steel sheet, which is a plating base sheet used as a base material, is not particularly restricted. As the steel sheet used as the plating base sheet, a variety of known steel sheets that are produced through an ordinary billet production process and an ordinary steel sheet production process (e.g., hot rolling, pickling, cold rolling, annealing, and temper rolling) can be used.

### (Ni plated layer)

In the steel sheet for a container of the disclosure, in order to realize superior sulfide stain resistance, corrosion resistance, adhesion and weldability, Ni plating containing ZnO particles is performed on one or both sides of the plating base sheet to form an Ni plated layer. Ni is a metal which has corrosion resistance, adhesion and weldability. The Ni plated layer formed on the steel sheet used as the plating base sheet has an Ni plating amount of not less than 0.3 g/m² per side in terms of metal Ni amount and thereby exerts practical corrosion resistance, adhesion and weldability. As the Ni plating amount is increased, the corrosion resistance, the adhesion and the weldability are improved. However, when the Ni plating amount exceeds 3 g/m² per side in terms of metal Ni amount, the effect of improving the corrosion resistance, the adhesion and the weldability is saturated. Thus, an excessively large Ni plating amount is industrially disadvantageous. Accordingly, the Ni plating amount is from 0.3 g/m² to 3 g/m² per side in terms of metal Ni amount. The Ni plating amount is preferably from 0.5 g/m² to 2.5 g/m², more preferably from 0.5 g/m² to 1.5 g/m², in terms of metal Ni amount per side. It is noted here that the metal Ni amount indicates a metal Ni equivalent amount.

The Ni plated layer contains ZnO particles, and the ZnO particles exist in a dispersed state in the Ni plated layer. The ZnO particles used in the steel sheet for a container of the disclosure are not particularly defined, and any commercially available known ZnO particles can be used. As described above, the ZnO particles in the Ni plated layer improve the sulfide stain resistance. By controlling the content of the ZnO particles to be 0.1% by mass or higher per side in terms of metal Zn amount based on the total mass of the Ni plated layer, the sulfide stain resistance-improving effect is realized. Meanwhile, since the ZnO particles are insulators, an excessively high content of the ZnO particles deteriorates the weldability in electric resistance welding, causing welding defects. Such welding defects are prominent when the content of the ZnO particles exceeds 20% by mass per side in terms of metal Zn amount. Accordingly, the content of the ZnO particles in the Ni plated layer is 20% by mass or less per side in terms of metal Zn amount. The content of the ZnO particles in the Ni plated layer is preferably from 0.5% by mass to 15% by mass, more preferably from 0.5% by mass to 7% by mass, in terms of metal Zn amount per side. It is noted here that the metal Zn amount indicates an amount in terms of metal Zn.

The size of the ZnO particles contained in the Ni plated layer (the average particle size of the ZnO particles) is not particularly defined. The size of the ZnO particles may be larger or smaller than the plating thickness of the Ni plated layer. However, when the size of the ZnO particles is larger than the plating thickness of the Ni plated layer, the ZnO particles may be detached during transport and processing. Accordingly, the size of the ZnO particles is preferably not larger than the plating thickness of the Ni plated layer, more preferably not larger than half of the plating thickness of the Ni plated layer. The average particle size of the ZnO particles used in the formation of the Ni plated layer is not particularly restricted; however, it is, for example, from 20 nm to 200 nm. It is noted here that the average particle size of the ZnO particles indicates a value calculated from a particle size distribution obtained by a laser diffraction-scattering method in accordance with ISO 13320 and JIS Z8825-1 (2001). As a commercial product of such ZnO particles, for example, zinc oxide manufactured by Sakai Chemical Industry Co., Ltd. is available.

A method of providing the Ni plated layer containing the ZnO particles is not particularly defined. For example, a method of performing cathode electrolysis using a solution obtained by dispersing the ZnO particles in a known acidic Ni plating solution (e.g., an acidic Ni plating solution composed of Ni sulfate and Ni chloride) is industrially useful. Further, a dispersant which inhibits aggregation of the ZnO particles may be added to such a solution. The content of the ZnO particles in the Ni plated layer can be controlled by adjusting the amount of the ZnO particles dispersed in the solution. Generally speaking, as the amount of the ZnO particles dispersed in the solution is increased, the content of the ZnO particles in the Ni plated layer tends to be increased.

The ZnO particles contained in the Ni plated layer may exist in a state where individual ZnO particles are substantially uniformly dispersed, or the ZnO particles may be dispersed in the form of aggregates having a size in a range of not larger than the plating thickness of the Ni plated layer.

### (Chromate coated film)

In the steel sheet for a container of the disclosure, in order to ensure excellent corrosion resistance and adhesion (in particular, secondary lacquer adhesion), the Ni plated layer is treated with chromate to form a chromate coated film on the Ni plated layer. This chromate treatment forms, on the Ni plated layer, for example, (1) a chromate coated film having a single-layer structure containing hydrated Cr oxide, or (2) a chromate coated film having a bilayer structure in which a lower layer (a layer on the side of the Ni plated layer) contains metal Cr and an upper layer (a layer on the surface side of the steel sheet for a container) contains hydrated Cr oxide.

The metal Cr or hydrated Cr oxide constituting the chromate coated film has excellent chemical stability. Thus, the corrosion resistance of the steel sheet for a container is improved in proportion to the amount of the chromate coated film. Further, the hydrated Cr oxide forms a strong chemical bond with a functional group of the coated film, thereby exerting excellent adhesion even in a heated steam atmosphere. Thus, the adhesion is improved as the amount of the adhered chromate coated film is increased. In order to allow the chromate coated film to exert practically sufficient corrosion resistance and adhesion, the chromate coated film is preferably formed in an amount of not less than 1 mg/m² per side in terms of metal Cr amount. An increase in the amount of the chromate coated film enhances the effect of improving the corrosion resistance and the adhesion. On the other hand, since the hydrated Cr oxide in the chromate coated film is an electrical insulator and thus has a very high electrical resistance, it may cause deterioration of the weldability. The weldability is markedly deteriorated when the amount of the chromate coated film exceeds 40 mg/m² per side in terms of metal Cr amount. Therefore, the amount of the chromate coated film is preferably not greater than 40 mg/m² per side in terms of metal Cr amount. The amount of the adhered chromate coated film is more preferably from 3 mg/m² to 20 mg/m² per side in terms of metal Cr amount.

A chromate treatment method is not particularly defined. Examples thereof include treatment methods using aqueous solutions of various chromic acid salts (e.g., sodium salt, potassium salt, and ammonium salt). The chromate treatment using an aqueous solution of such a chromic acid salt may be performed by any treatment method (e.g., an immersion treatment, a spray treatment, or an electrolysis treatment). For example, as the chromate treatment, it is industrially advantageous to perform a cathode electrolysis treatment in an aqueous solution obtained by adding sulfate ions, fluoride ions (including complex ions) or a mixture thereof as a plating aid to chromic acid.

### (Zr coated film)

In the steel sheet for a container of the disclosure, in place of the above-described chromate coated film, a Zr coated film containing a zirconium compound may be formed on the Ni plated layer. The "Zr coated film" refers to a coated film containing a Zr compound (e.g., Zr oxide or Zr phosphate). The Zr coated film dramatically improves the adhesion and the corrosion resistance by the same mechanism as the chromate coated film. In order to allow the Zr coated film to exert practically sufficient corrosion resistance and adhesion, the Zr coated film is preferably formed in an amount of not less than 1 mg/m² per side in terms of metal Zr amount. On the other hand, since the Zr coated film is an electrical insulator and thus has a very high electrical resistance, it may cause deterioration of the weldability. When the amount of the Zr coated film exceeds 40 mg/m² per side in terms of metal Zr amount, the deterioration of the weldability becomes prominent, and the outer appearance is deteriorated as well. Therefore, the amount of the Zr coated film is preferably not greater than 40 mg/m² per side in terms of metal Zr amount. The amount of the adhered Zr coated film is more preferably from 3 mg/m² to 20 mg/m² per side in terms of metal Zr amount. It is noted here that the metal Zr amount indicates a metal Zr equivalent amount.

A method of providing the Zr coated film is not particularly defined. For example, a method of performing an immersion or cathode electrolysis treatment in an acidic solution containing hydrofluoric acid as a main component (e.g., Zr fluoride or Zr phosphate) may be employed (see, for example, Patent Document 8).

### (Methods of Measuring Adhered Amount, etc.)

The Ni plating amount, the content of the ZnO particles, the amount of the chromate coated film and the amount of the Zr coated film can be determined by, for example, a calibration curve method based on X-ray fluorescence.

The measurement of the Ni plating amount is described as an example. First, plural test pieces each having a known amount of metal Ni are prepared. Next, for each of the test pieces, the intensity of Ni-derived X-ray fluorescence emitted from the surface of the Ni plated layer is measured in advance using an X-ray fluorescence analyzer. Then, a calibration curve which represents the relationship between the measured intensity of the X-ray fluorescence and the metal Ni amount is prepared. Thereafter, for the steel sheet for a container of interest, the chromate coated film or the Zr coated film is removed from the surface of the steel sheet for a container to prepare a test piece on which the Ni plated layer is exposed. For this surface on which the Ni plated layer is thus exposed, the intensity of Ni-derived X-ray fluorescence is measured using an X-ray fluorescence analyzer. By utilizing the thus measured intensity of the X-ray fluorescence and the calibration curve prepared in advance, the Ni plating amount per side can be specified in terms of metal Ni amount.

The content of the ZnO particles, the amount of the chromate coated film and the amount of the Zr coated film can also be determined in the same manner as the Ni plating amount. Specifically, the intensity of X-ray fluorescence derived from each metal element of Zn of the Zn particles, Cr of the chromate coated film and Zr of the Zr coated film is measured, and the content of the ZnO particles per side as well as the amount of the chromate coated film per side and that of the Zr coated film per side can be determined by the above-described calibration curve method.

As for the content of the ZnO particles, in the same manner as in the measurement of the Ni plating amount, the chromate coated film or the Zr coated film is removed, and the intensity of Zn-derived X-ray fluorescence emitted from the surface on which the Ni plated layer is exposed is measured. Further, as for the amount of the chromate coated film or that of the Zr coated film, the intensity of Cr- or Zr-derived X-ray fluorescence emitted from the coated film surface is measured.

In the case of measuring the average particle size (circle-equivalent diameter) of the ZnO particles afterward, the measurement can be made by cross-sectional SEM (Scanning Electron Microscope) observation or TEM (Transmission Electron Microscope) observation. Specifically, after removing the chromate coated film or the Zr coated film, the surface on which the Ni plated layer is exposed is observed under an SEM, and the average particle size of the ZnO particles can be determined as the average circle-equivalent diameter of the ZnO particles observed in a field of view.

The steel sheet for a container of the disclosure includes: a steel sheet; an Ni plated layer which is arranged on at least one side of the steel sheet and adhered in an amount of from 0.3 to 3 g/m² per side in terms of Ni amount, the Ni plated layer containing from 0.1 to 20% by mass of ZnO particles per side in terms of Zn amount; and a chromate coated film or a Zr coated film which is arranged on the Ni plated layer, and the steel sheet, the Ni plated layer and the chromate coated film or the Zr coated film may be provided in the order mentioned.

Thus far, the steel sheet for a container of the disclosure has been described in detail.

### EXAMPLES

The steel sheet for a container of the disclosure will now be described concretely by way of Examples thereof. It is noted here, however, that the below-described Examples are merely examples of the steel sheet for a container of the disclosure, and the steel sheet for a container of the disclosure is not restricted thereto.

In the followings, for the steel sheet for a container of the disclosure, test materials were prepared by the method described in below (1), and the performance was evaluated for each of the items (A) to (F) described in below (2). The results thereof are shown in Table 1 below.

### (1) Test Material Preparation Method

- Plating base sheet: a 0.2 mm-thick cold-rolled steel sheet of temper-grade 3 (T-3) was used as a plating base sheet.
- Ni plating conditions: A solution which contained Ni sulfate, Ni chloride and boric acid at concentrations of 20%, 15% and 1%, respectively, and had an adjusted pH of 5.5 was prepared. To the thus obtained solution, ZnO particles having an average particle size of 20 nm, 60 nm, 120 nm or 200 nm were added in an amount of from 0.1 to 1% in terms of solid content. Using this solution, cathode electrolysis was performed at a current density of 5 A/dm² to form an Ni plated layer on both sides of the steel sheet serving as the plating base sheet. The amount of Ni to be adhered was controlled by adjusting the electrolysis time in a range of from 0.1 to 10 seconds.

As the ZnO particles, ZnO particles manufactured by Sakai Chemical Industry Co., Ltd. were used. The average particle size of the ZnO particles indicates a value calculated from a particle size distribution obtained by a laser diffraction-scattering method in accordance with ISO 13320 and JIS Z8825-1.
- Chromate treatment conditions: Cathode electrolysis was performed at a current density of 10 A/dm² in a solution containing Cr (VI) oxide, sulfuric acid and ammonium fluoride at concentrations of 10%, 0.2% and 0. 1%, respectively. Subsequently, the resultant was washed with water for 10 seconds to impart a chromate coated film to the steel sheet on which the Ni plated layer had been formed. The amount of the chromate coated film to be adhered was controlled by adjusting the electrolysis time in a range of from 0.1 to 10 seconds.
- Zr coated film treatment conditions: Cathode electrolysis was performed at a current density of 10 A/dm² in a solution containing Zr fluoride, phosphoric acid and hydrofluoric acid at concentrations of 5%, 4% and 5%, respectively, whereby a Zr coated film was imparted to the steel sheet on which the Ni plated layer had been formed. The amount of the Zr coated film to be adhered was controlled by adjusting the electrolysis time in a range of from 0.1 to 10 seconds.

### (2) Sample Evaluation Methods

### (A) Sulfide Stain Resistance

The test materials prepared in (1) were each coated with an epoxy-phenol resin in an amount of 70 mg/dm², baked at 200°C for 30 minutes, and then immersed in a 0.6% cysteine hydrochloride solution at 130°C for 2 hours (sulfide stain resistance 1).

Further, the test materials were each coated with an epoxy-phenol resin in an amount of 70 mg/dm², backed under the same conditions as described above, and then immersed in a 0.6% cysteine hydrochloride solution at 130°C for 2 hours twice (sulfide stain resistance 2).

The sulfide stain resistance 1 and the sulfide stain resistance 2 were evaluated by judging the blackened state based on the following four-grade scale. It is noted here that, among the following four evaluation grades, evaluations of "B" or better were regarded as satisfactory.
A: No blackening was observed at all.
B: The blackened area ratio was higher than 0% but 1% or less.
C: The blackened area ratio was higher than 1% but 5% or less.
D: The blackened area ratio was higher than 5%.

### (B) Corrosion Resistance

The test materials prepared in (1) were each coated with an epoxy-phenol resin in an amount of 80 mg/dm² and baked at 200°C for 30 minutes, after which a cross-cut was made on each test material at a depth reaching the base metal. Each test material was then immersed in a 45°C test liquid composed of a liquid mixture having a citric acid concentration of 1.5% and a common salt concentration of 1.5% for 72 hours. After washing and drying each test material, the resulting coated film was peeled off using an adhesive tape (trade name: CELLOTAPE (registered tradename)), and the corrosion state under the coated film of a cross-cut portion as well as the corrosion state of a flat sheet portion were observed. The corrosion resistance was evaluated by judging the corrosion width under the coated film and the corrosion area ratio of the flat sheet portion based on the following four-grade scale. It is noted here that, among the following four evaluation grades, evaluations of "B" or better were regarded as satisfactory.

A: The corrosion width under the coated film was less than 0.2 mm and the corrosion area ratio of the flat sheet portion was 0%.
B: The corrosion width under the coated film was from 0.2 mm to less than 0.3 mm and the corrosion area ratio of the flat sheet portion was higher than 0% but 1% or less.
C: The corrosion width under the coated film was from 0.3 mm to less than 0.45 mm and the corrosion area ratio of the flat sheet portion was higher than 1% but 5% or less.
D: The corrosion width under the coated film was 0.45 mm or greater, or the corrosion area ratio of the flat sheet portion was higher than 5%.

### (C) Workability

A 20 µm-thick PET film was laminated on both sides of each test material prepared in (1) at 200°C, and the thus laminated test material was punched out in a size of 150 mm in diameter. Subsequently, the test material was subjected to can making by drawing and ironing with the film side facing inside, whereby a DI can of 66 mm in diameter and 120 mm in height was produced. Defects, floating and detachment of the film were observed, and the workability was evaluated in terms of area ratio thereof based on the following four-grade scale. It is noted here that, among the following four evaluation grades, evaluations of "B" or better were regarded as satisfactory.

A: No detect, floating or detachment of the film was observed.
B: The area ratio of defects, floating and detachment of the film was higher than 0% but 0.5% or less.
C: The area ratio of defects, floating and detachment of the film was higher than 0.5% but 15% or less.
D: The area ratio of defects, floating and detachment of the film was higher than 15%, or the test material could not be processed due to breakage.

### (D) Weldability

Using a wire seam welding machine, the test materials prepared in (1) were each welded at a welding wire speed of 80 m/min with varying current. Based on the following four-grade scale, the weldability was evaluated by comprehensively judging the extent of an appropriate current range from a minimum current value at which sufficient welding strength was obtained and a maximum current value at which welding defects (e.g., dust and weld spatter) became noticeable. It is noted here that, among the following four evaluation grades, evaluations of "B" or better were regarded as satisfactory.

A: Appropriate secondary-side current range = 1,500 A or more
B: Appropriate secondary-side current range = from 800 A to less than 1,500 A
C: Appropriate secondary-side current range = from 100 A to less than 800 A
D: Appropriate secondary-side current range = less than 100A

### (E) Lacquer Adhesion

The test materials prepared in (1) were each coated with an epoxy-phenol resin in an amount of 70 mg/dm² and baked at 200°C for 30 minutes, after which cross-cuts having a depth reaching the base metal were made at 1 mm intervals. Subsequently, the resulting coated film was peeled off using an adhesive tape (trade name: CELLOTAPE (registered tradename)), and the peeling state was observed. The lacquer adhesion was evaluated in terms of peeled area ratio based on the following four-grade scale. It is noted here that, among the following four evaluation grades, evaluations of "B" or better were regarded as satisfactory.

A: Peeled area ratio = 0%
B: Peeled area ratio = higher than 0% but 5% or less
C: Peeled area ratio = higher than 5% but 30% or less
D: Peeled area ratio = higher than 30%

### (F) Secondary Lacquer Adhesion

The test materials prepared in (1) were each coated with an epoxy-phenol resin in an amount of 70 mg/dm² and baked at 200°C for 30 minutes, after which cross-cuts having a depth reaching the base metal were made at 1 mm intervals. Then, each test material was treated in a heated steam atmosphere at 125°C for 30 minutes (retort treatment). After the test material was dried, the resulting coated film was peeled off using an adhesive tape (trade name: CELLOTAPE (registered tradename)), and the peeling state was observed. The secondary lacquer adhesion was evaluated in terms of peeled area ratio based on the following four-grade scale. It is noted here that, among the following four evaluation grades, evaluations of "B" or better were regarded as satisfactory.

A: Peeled area ratio = 0%
B: Peeled area ratio = higher than 0% but 5% or less
C: Peeled area ratio = higher than 5% but 30% or less
D: Peeled area ratio = higher than 30%

### (G) Film Adhesion

A 20 µm-thick PET film was laminated on both sides of each test material prepared in (1) at 200°C, and the thus laminated test material was punched out in a size of 150 mm in diameter. Subsequently, the test material was subjected to drawing and ironing with the film side facing inside, whereby a DI can of 66 mm in diameter and 120 mm in height was produced. Then, this DI can was retort-treated at 125°C for 30 minutes, and the peeling state of the film was observed. The film adhesion was evaluated in terms of peeled area ratio based on the following four-grade scale. It is noted here that, among the following four evaluation grades, evaluations of "B" or better were regarded as satisfactory.

A: Peeled area ratio = 0%
B: Peeled area ratio = higher than 0% but 2% or less
C: Peeled area ratio = higher than 2% but 10% or less
D: Peeled area ratio = higher than 10%

**[Table 1]**

| | No. | Ni plated layer | | | | Coated film | | Evaluation of Properties | | | | | | | |
|---|---|---|---|---|---|---|---|---|---|---|---|---|---|---|---|
| | | Ni amount (g/m²) | Calculated Ni thickness (nm) | ZnO average particle size (nm) | ZnO content (%) | Chromate coated film (mg/m²) | Zr coated film (mg/m²) | Sulfide stain resistance 1 | Sulfide stain resistance 2 | Corrosion resistance | Workability | Weldability | Lacquer adhesion | Secondary lacquer adhesion | Film adhesion |
| | 1 | 0.3 | 34 | 20 | 5 | 15 | - | A | A | A | A | A | A | A | A |
| | 2 | 0.6 | 67 | 20 | 15 | 4 | - | A | A | A | A | A | A | A | A |
| | 3 | 1.2 | 135 | 20 | 0.2 | 1 | - | A | B | A | A | A | A | A | A |
| | 4 | 2.4 | 269 | 20 | 19 | 38 | - | A | A | A | A | B | A | A | A |
| | 5 | 2.9 | 325 | 20 | 3 | 22 | - | A | A | A | A | B | A | A | A |
| | 6 | 0.3 | 34 | 60 | 0.7 | 3 | - | A | A | A | A | A | B | B | A |
| | 7 | 0.6 | 67 | 60 | 2 | 8 | - | A | A | A | A | A | A | A | A |
| | 8 | 1.2 | 135 | 60 | 8 | 15 | - | A | A | A | A | A | A | A | A |
| | 9 | 2.4 | 269 | 60 | 12 | 17 | - | A | A | A | A | A | A | A | A |
| | 10 | 2.9 | 325 | 60 | 5 | 22 | - | A | A | A | A | B | A | A | A |
| | 11 | 1.2 | 135 | 120 | 15 | 31 | - | A | A | A | A | B | A | A | A |
| | 12 | 2.4 | 269 | 120 | 0.2 | 29 | - | A | B | A | A | B | A | A | A |
| | 13 | 2.9 | 325 | 120 | 19 | 18 | - | A | A | A | A | A | A | A | A |
| | 14 | 1.2 | 135 | 200 | 3 | 11 | - | A | A | A | A | A | B | B | A |
| | 15 | 2.4 | 269 | 200 | 0.2 | 10 | - | A | B | A | A | A | A | A | A |
| | 16 | 2.9 | 325 | 200 | 19 | 5 | - | A | A | A | A | A | A | A | A |
| Examples | 17 | 0.3 | 34 | 20 | 5 | - | 15 | A | A | A | A | A | A | A | A |
| | 18 | 0.6 | 67 | 20 | 15 | - | 4 | A | A | A | A | A | A | A | A |
| | 19 | 1.2 | 135 | 20 | 0.2 | - | 1 | A | B | A | A | A | A | A | A |
| | 20 | 2.4 | 269 | 20 | 19 | - | 38 | A | A | A | A | B | A | A | A |
| | 21 | 2.9 | 325 | 20 | 3 | - | 22 | A | A | A | A | B | A | A | A |
| | 22 | 0.3 | 34 | 60 | 0.7 | - | 3 | A | A | A | A | A | B | B | A |
| | 23 | 0.6 | 67 | 60 | 2 | - | 8 | A | A | A | A | A | A | A | A |
| | 24 | 1.2 | 135 | 60 | 8 | - | 15 | A | A | A | A | A | A | A | A |
| | 25 | 2.4 | 269 | 60 | 12 | - | 17 | A | A | A | A | A | A | A | A |
| | 26 | 2.9 | 325 | 60 | 5 | - | 22 | A | A | A | A | B | A | A | A |
| | 27 | 1.2 | 135 | 120 | 15 | - | 31 | A | A | A | A | B | A | A | A |
| | 28 | 2.4 | 269 | 120 | 0.2 | - | 29 | A | B | A | A | B | A | A | A |
| | 29 | 2.9 | 325 | 120 | 19 | - | 18 | A | A | A | A | A | A | A | A |
| | 30 | 1.2 | 135 | 200 | 3 | - | 11 | A | A | A | A | A | B | B | A |
| | 31 | 2.4 | 269 | 200 | 0.2 | - | 10 | A | B | A | A | A | A | A | A |
| | 32 | 2.9 | 325 | 200 | 19 | - | 5 | A | A | A | A | A | A | A | A |
| | 33 | 0.6 | 67 | 20 | 0.1 | 3 | - | A | B | A | A | A | A | A | A |
| | 34 | 1.2 | 135 | 20 | 0.5 | 8 | - | A | A | A | A | A | A | A | A |
| | 35 | 2.4 | 269 | 20 | 15 | 15 | - | A | A | A | A | B | A | A | A |
| | 36 | 2.9 | 325 | 20 | 20 | 8 | - | A | A | A | A | B | A | A | A |
| Comparative Examples | 1 | 0.2 | 22 | 20 | 3 | 12 | - | A | A | D | A | C | A | A | A |
| | 2 | 0.6 | 67 | 60 | 0.04 | 18 | - | D | D | A | A | A | A | A | A |
| | 3 | 1.2 | 135 | 120 | 22 | 7 | - | A | A | A | A | D | A | A | A |
| | 4 | 3.8 | 426 | 200 | 0.5 | 0.8 | - | A | A | A | A | A | D | D | D |
| | 5 | 0.6 | 67 | 200 | 15 | - | - | A | A | B | A | A | D | D | D |
| | 6 | 1.2 | 135 | 20 | 28 | - | 0.8 | A | A | A | A | D | D | D | D |
| | 7 | 2.4 | 269 | 120 | 7 | - | - | A | A | D | A | A | D | D | D |
| | 8 | 0.1 | 11 | 120 | 0.04 | 0.8 | - | D | D | D | A | C | D | D | D |
| | 9 | 4.2 | 471 | 120 | 18 | - | 0.8 | A | A | D | A | A | D | D | D |
| | 10 | 0.6 | 67 | 60 | 0.08 | 18 | - | D | D | A | A | A | A | A | A |
| | 11 | 0.25 | 28 | 120 | 0.08 | 0.8 | - | D | D | D | A | C | D | D | D |
| | 12 | 0.25 | 28 | 120 | 18 | - | 0.8 | A | A | D | A | C | D | D | D |

As apparent from Table 1 above, it is seen that Examples 1 to 36 satisfying the ranges of the disclosure had favorable properties such as sulfide stain resistance.

On the other hand, it is seen that Comparative Examples not satisfying the ranges of the disclosure did not attain favorable properties.

In Comparative Examples 1 and 12, the corrosion resistance was deteriorated due to insufficient Ni amount and, in Comparative Examples 2 and 10, the sulfide stain resistance was poor due to low content of ZnO particles. In Comparative Example 3, the weldability was poor due to high content of ZnO particles. In Comparative Example 4, the Ni amount was excessively large. Further, in Comparative Example 4, the adhesion was poor due to insufficient metal Cr amount in the chromate coated film. In Comparative Example 5, the adhesion was poor due to the absence of chromate coated film. In Comparative Example 6, the weldability and the adhesion were poor due to an excessively high content of ZnO particles. In Comparative Example 7, the corrosion resistance and the adhesion were poor due to the absence of Zr coated film. In Comparative Examples 8 and 11, due to insufficient Ni amount and low content of ZnO particles, the sulfide stain resistance, the corrosion resistance, the weldability and the adhesion were poor. In Comparative Example 9, the Ni amount was excessively large. Further, in Comparative Example 9, the corrosion resistance and the adhesion were poor due to insufficient metal Zr amount in the Zr coated film.

In Table 1, the Ni amount (amount in terms of metal Ni), the ZnO content (content of ZnO particles in terms of metal Zn), the amount of chromate coated film (amount in terms of metal Cr), and the amount of Zr coated film (amount in terms of metal Zr) were all measured by the above-described method using X-ray fluorescence. These amounts each indicate an amount per side.

In Table 1, the underlined values indicate that the values are outside the respective ranges of the steel sheet for a container of the disclosure.

Thus far, the steel sheet for a container of the disclosure has been described in detail; however, the disclosure is not restricted to the examples described above. It is obvious that a person of ordinary skill in the technical field of the disclosure would be able to conceive various modifications and corrections within the scope of the technical idea described in claims, and such modifications and corrections are also naturally understood to fall under the technical scope of the disclosure.

The disclosure of Japanese Patent Application No. 2016-103541 is hereby incorporated by reference in its entirety.

All the documents, patent applications and technical standards that are described in the present specification are hereby incorporated by reference to the same extent as if each individual document, patent application or technical standard is specifically and individually described to be incorporated by reference.

## Claims

1. A steel sheet for a container, the steel sheet comprising:
a steel sheet;
an Ni plated layer, which is arranged on at least one side of the steel sheet and is adhered in an amount of from 0.3 to 3 g/m² per side in terms of metal Ni amount; and
a chromate coated film or a Zr coated film, which is arranged on the Ni plated layer,
wherein the Ni plated layer contains from 0.1 to 20% by mass of ZnO particles per side in terms of metal Zn amount.

2. The steel sheet for a container according to claim 1, wherein the Ni plated layer contains from 0.5 to 15% by mass of the ZnO particles per side in terms of metal Zn amount.

3. The steel sheet for a container according to claim 1 or 2, wherein the chromate coated film contains from 1 to 40 mg/m² of Cr per side in terms of metal Cr amount.

4. The steel sheet for a container according to claim 1 or 2, wherein the Zr coated film contains from 1 to 40 mg/m² of Zr per side in terms of metal Zr amount.
